# EUROPEAN PATENT APPLICATION

(11) **EP 4 537 962 A1**
(43) Date of publication of application: **16.04.2025**
(21) Application number: 23203543.6
(22) Date of filing: 13.10.2023
(51) Int. Cl.: B23B 27/16

(54) **A TURNING TOOL AND A TURNING TOOL ASSEMBLY**

(71) Applicant: AB Sandvik Coromant, 811 81 Sandviken (SE)
(72) Inventor: WICKSTRÖM, David, 811 81 Sandviken (SE); LÖF, Ronnie, 811 81 Sandviken (SE); WIKBLAD, Krister, 811 81 Sandviken (SE)
(74) Representative: Sandvik

(57) **Abstract**

The invention relates to a turning tool (1) comprising a tool body (2) with an insert seat (5) configured to accommodate a cutting insert (6a-c). The insert seat (5) comprises a bottom surface and first (8a) and second (8b) side wall sections, together defining a space for receiving the cutting insert. The insert seat (5) further comprises a stiff member (17) formed in one piece by a first end portion (18a) thereof to an upper part of the first side wall section (8a) and by a second end portion (18b) thereof to an upper part of the second side wall section (8b) so as to extend between and rigidly interconnect said side wall sections over said space. The invention also relates to a turning tool assembly comprising such a turning tool (1) and a cutting insert (6a-c).

## Description

### TECHNICAL FIELD OF THE INVENTION

The present invention belongs to the technical field of metal cutting. More specifically the present invention belongs to the field of turning tools used for metal cutting in machines such as CNC-machines.

### BACKGROUND OF THE INVENTION AND PRIOR ART

The present invention relates to a turning tool according to the preamble of claim 1, as well as a turning tool assembly according to the preamble of claim 14.

The present invention refers to a turning tool according to the preamble of claim 1. In other words, the present invention refers to a turning tool comprising a tool body,
the tool body having at one end thereof a coupling portion configured for attachment to a machine tool, and at another end thereof an insert seat configured to accommodate a cutting insert, wherein
the insert seat comprises a bottom support surface and first and second side wall sections extending along at least a part of the bottom support surface on opposite lateral sides thereof;
the first side wall section comprises a first inner side wall surface and the second side wall section comprises a second inner side wall surface,
the bottom support surface and the first and second inner side wall surfaces together define a space for receiving at least a part of a said cutting insert;
the first inner side wall surface has a front end located at a front end portion of the first side wall section and the second inner side wall surface has a front end located at a front end portion of the second side wall section; and wherein
the front ends of the first and second inner side wall surfaces define an opening therebetween into said space.

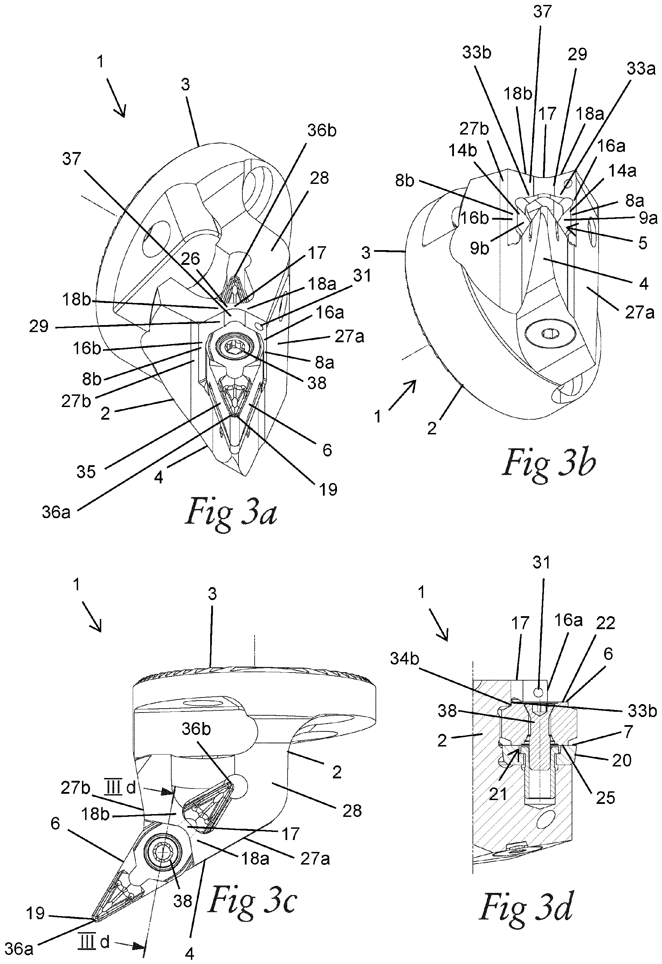

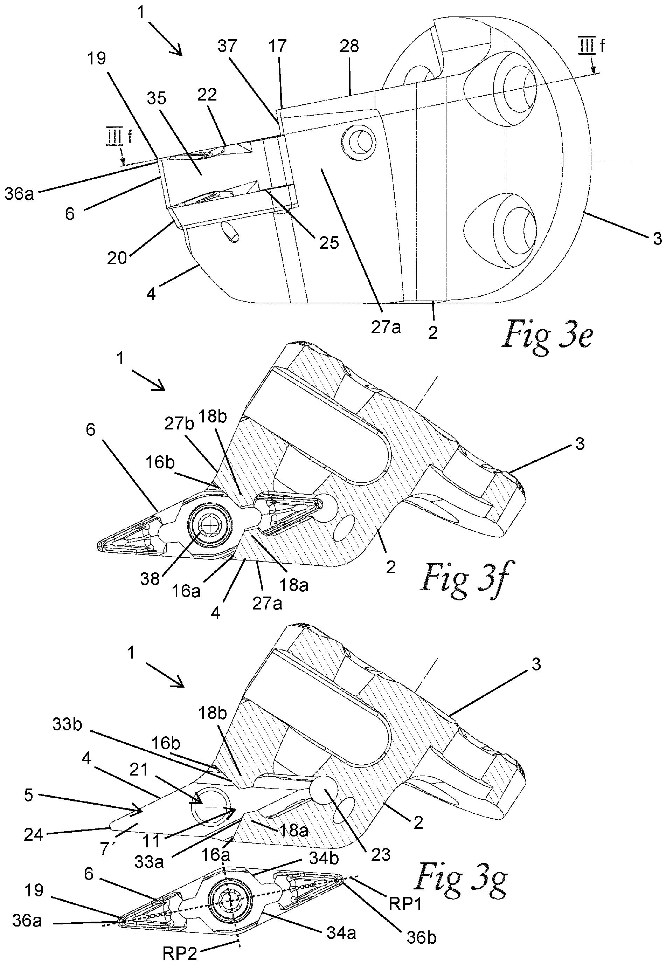

Such a turning tool is already known from EP 4091749 A1 (see for instance Figs. 3, 5-6 and 10-12), which discloses a turning tool (1) comprising a tool body (3) and a pocket/insert seat (7) for a turning insert (2) provided in an end portion of the tool body. The pocket (7) comprises a bottom support surface (8) and first and second pocket side surfaces (9, 10) defining a space for receiving the cutting insert therebetween through an opening to said space defined between front ends of the pocket side surfaces, which are located at and defining part of front end portions of respective side wall sections on which the pocket side surfaces are provided. As is seen in a top view, for instance in Fig 12, the front end portions of the side wall sections form acute angles with respective outer surfaces of the tool body, adjacent to the pocket. The pocket has an open top, which means that the cutting insert, when mounted in the pocket, is not covered by any part thereof, as seen in top view.

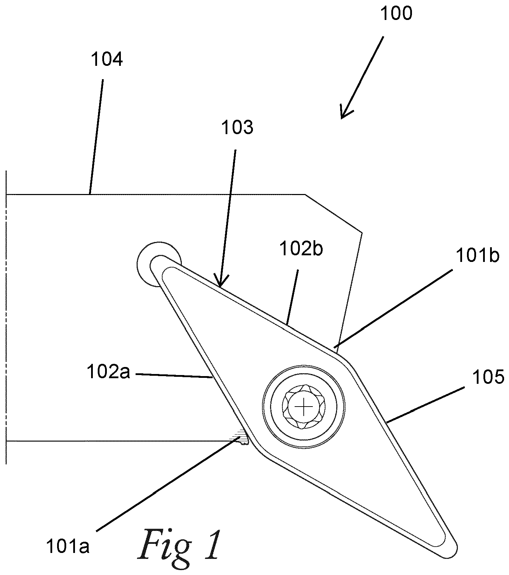

A conventional turning tool of this type is also schematically shown in Fig 1 of the present application.

Although the above described turning tools are well-functioning, the inventors have found that these leave a great room for improvement. One problem by such turning tools already known, for instance that shown in said document and in Fig 1 of the present application, is that large lateral forces on the cutting insert may result in damages on the tool body around the insert seat, and more specifically that the insert is pushed laterally towards a said side wall section with such a force that the front end portion thereof is deformed. Such a damage is shown in Fig 1 of the present application and eventually cause a replacement of the entire turning tool, which is costly. Furthermore, before the damages are that serious that the entire tool has to be replaced, even a small deformation of a said front end portion may deteriorate the stability of the cutting insert during machining, which may lead to an unsatisfied result of the machining operation and also increased wear on the cutting insert used.

Accordingly, increased wear resistance and tool life has been one main goal to achieve with the invention. Other areas in which the inventors have tried to find improvements with respect to turning tools already known are performance of the tool, surface finish of the machined workpiece, cost-efficiency and environmental-friendliness, which are in many cases related. There is a constant strive for continuous improvement of products of this type and there is still much to do within the field, in many aspects.

### SUMMARY OF THE INVENTION

The object of the present invention is to provide a turning tool of the type defined in the introduction, which turning tool is being improved in at least some aspect with respect to such turning tools already known, for instance in respect of wear resistance and tool life, surface finish on the workpiece to be machined, economic and/or environmental aspects.

This object is according to the invention obtained by providing a turning tool by which the insert seat further comprises a stiff member configured to be rigidly connected by a first end portion thereof to an upper part of the front end portion of the first side wall section and by a second end portion thereof to an upper part of the front end portion of the second side wall section and to extend between said upper parts of the front end portions of the first and second side wall sections over and at a distance to the bottom support surface.

The inventors have found that by arranging such a stiff member between and rigidly interconnecting the front end portions of the side wall sections a stronger and stiffer insert seat is achieved. More specifically, the insert seat may manage substantially larger lateral forces applied thereto by a cutting insert mounted in the insert seat, before there is a risk that the front end portions thereof begin to deform. This results especially in a more wear resistant tool and thereby increased tool life, but also imply other positive effects, such as increased performance of the tool as this may more stabily hold a cutting insert in a precise position during a turning operation, which increase the possibilities to achieve a satisfying surface finish of the machined workpiece.

According to an embodiment of the invention the stiff member is made in one piece with the upper part of the front end portion of the first side wall section and the upper part of the front end portion of the second side wall section. This design provides a very strong rigid connection between the upper parts of the two front end portions and thus ensures a strong and durable insert seat.

According to another embodiment of the invention a top surface of the stiff member is coherent with portions of a top surface of the tool body adjacent to the stiff member. This design provides a strong structure of the stiff member and parts of the tool body adjacent to it, as well as reduces unnessesary protruding parts, such as edges or wall surfaces, which may get damaged or create spaces for chips to get stuck.

According to another embodiment of the invention the first and second inner side wall surfaces of the first and second side wall sections extend divergently from each other in a direction away from a rear end of the insert seat towards the opening thereof such that a width of the space defined between the first and second inner side wall surfaces increases in said direction.

According to another embodiment of the invention at least one of the first and second inner side wall surfaces of the first and second side wall sections is configured to form, together with an outer side surface of the tool body adjacent to the insert seat and located on the same side thereof as said at least one of the first and second inner side wall surfaces, a front end portion of the respective side wall section having an acute angle as seen in top view.

According to another embodiment of the invention each of the first and second inner side wall surfaces of the first and second side wall sections is configured to form, in each case together with an outer side surface of the tool body adjacent to the insert seat and located on the same side thereof as the respective inner side wall surface, a front end portion of the respective side wall section having an acute angle as seen in top view.

The arrangement of a stiff member according to the invention is especially suitable for turning tools with insert seats having one or two front end portions of the side wall sections forming acute angles with the respective adjacent outer surface of the tool body, which acute front end portions have less material thickness and thereby are more susceptible to deformation.

According to another embodiment of the invention the stiff member is configured to be rigidly connected by its first and second end portions thereof to and over an entire height of the respective upper parts of the front end portions of the first and second side wall sections, wherein the height of each said upper part is defined as at least 20%, preferably at least 25%, even more preferred at least 30%, of a height of the respective front end portion measured between an upper end thereof and a position therealong located in a plane in which the bottom support surface extends. This design and arrangement of the stiff member ensures good stress absorption from and stability to the front end portions.

According to another embodiment of the invention the stiff member is configured to be rigidly connected by its first and second end portions thereof to and over at least 20%, preferably at least 25%, even more preferred at least 30%, of a length of respective ones of the first and second inner side wall surfaces, along respective upper portions thereof, wherein the length of each inner side wall surface is measured from the front end to a rear end thereof, in a direction from said front end towards a rear end of the insert seat. This design and arrangement of the stiff member ensures good stress absorption from and stability to the front end portions.

According to another embodiment of the invention a front side surface of the stiff member is concavely formed, preferably arc-shaped or at least substantially arc-shaped, as seen in top view, such that a center portion of the front side surface of the stiff member is located closer to a rear end of the insert seat than portions of the front side surfaces located at the first and second end portions of the stiff member. This design of the stiff member provides a good supporting effect therefrom to the front end portions of the side wall sections while simultaneously leaving space for facilitating an uncomplicated mounting of a cutting insert in the insert seat.

According to another embodiment of the invention the bottom support surface has a symmetrical, or at least substantially symmetrical, shape, it is provided with a hole, especially a threaded hole, in the center thereof, to enable attachement of a said cutting insert by a fastening element, especially a screw, thereto, and the stiff member is arranged between the center hole of the bottom support surface and a rear end of the insert seat such that the center hole is not covered by any part of the stiff member as seen in top view. This design of the insert seat and arrangement of the stiff member facilitates an uncomplicated mounting of a cutting insert in the insert seat.

According to another embodiment of the invention the stiff member is arranged such that a distance from a center axis of the center hole of the bottom support surface to a front side surface of the center portion of the stiff member, as measured from said center axis in a direction in parallel with a plane in which the bottom support surface extends towards a rear end of the insert seat, is equal to or less than 40%, preferably equal to or less than 30%, even more preferred equal to or less than 20%, of a total length of the bottom support surface, as measured from a front end of the bottom support surface, most distant from the rear end of the insert seat, to a rear end of the bottom support surface, located at or close to the rear end of the insert seat. This arrangement of the stiff member at a significant distance to the rear end of the insert seat ensures that the side wall sections are provided with a substantial support far to the front end thereof where it is mostly needed.

According to another embodiment of the invention the turning tool further comprises a shim, and the bottom support surface of the insert seat is defined by a top surface of the shim.

According to another embodiment of the invention the tool body is provided with a coolant conveying system, comprising an inlet configured to receive coolant from the machine tool,
an outlet located behind at least a front portion of the insert seat and configured to dispense coolant over at least a part of said front portion during use of the turning tool, and
a coolant passageway for passage of coolant from the inlet to the outlet of the coolant conveying system,
wherein the outlet is arranged in a front side surface of the stiff member.

By providing a coolant outlet in the stiff member this comes closer to a cutting edge of an insert received and mounted in the insert seat, compared to if the outlet were arranged behind the entire insert seat, which is a common placement of coolant outlets on turning tools of this type already known. A more focused coolant provision allowing more efficient cooling during a turning operation is thereby achieved.

According to another embodiment of the invention the stiff member is provided with at least one stop surface arranged to face in a direction away from a rear end and towards a front end of the insert seat. Such a stop surface provides the possibility to design a corresponding contact surface on an insert to be mounted in the insert seat and thus increased possibilities to secure and keep the insert in a fixed and stable position during use. In a further embodiment the at least one stop surface is a machined, especially grinded, stop surface. This means a more precise contact between the stop surface and the corresponding contact surface of a cutting insert, thereby enabling an increased precision in the positioning of the cutting edge thereof.

The invention also relates to a turning tool assembly according to the appended independent claim thereof. Realizations of, and advantages with, such a turning tool assembly clearly appears from the above description of embodiments of a turning tool according to the invention and the following description of embodiments of a turning tool as well as a turning tool assembly according to the invention.

Further advantages and advantageous features of the invention will appear from the following detailed description of embodiments thereof.

### DESCRIPTION OF THE DRAWINGS

With reference to the appended drawings, below follows a specific description of embodiments of the invention cited as examples.
- Fig. 1: is a schematic top view showing a conventional type turning tool, forming part of the prior art,
- Fig. 2a: is a view obliquely from above from a front side of a turning tool according to a first embodiment of the invention, with a cutting insert mounted in the insert seat,
- Fig. 2b: is an exploded view of the turning tool and cutting insert of Fig. 2a,
- Fig. 2c: is a top view of the turning tool and cutting insert of Fig. 2a,
- Fig. 2d: is a sectional lateral view through the turning tool and cutting insert of Fig. 2a as seen in the section indicated "IId" in Fig. 2c,
- Fig. 2e: is a view corresponding to Fig. 2c showing the turning tool without cutting insert,
- Fig. 2f: is a sectional lateral view corresponding to Fig. 2d showing the turning tool without cutting insert as seen in the section indicated "Ilf" in Fig. 2e,
- Fig. 3a: is a view obliquely from above from a front side of a turning tool according to a second embodiment of the invention, with a cutting insert mounted in the insert seat,
- Fig. 3b: is a view obliquely from below from a front side of the turning tool of Fig. 3a without cutting insert,
- Fig. 3c: is a top view of the turning tool and cutting insert of Fig. 3a,
- Fig. 3d: is a sectional lateral view through the turning tool and cutting insert of Fig. 3a as seen in the section indicated "IIId" in Fig. 3c,
- Fig. 3e: is a lateral view of the turning tool and cutting insert of Fig. 3a,
- Fig. 3f: is a sectional top view of the turning tool and cutting insert of Fig. 3a as seen in the section indicated "Illf" in Fig. 3e,
- Fig. 3g: is a sectional top view corresponding to Fig. 3f but with the cutting insert pulled out of the insert seat of the turning tool,
- Fig. 4a: is a view obliquely from above obliquely from a front side of a turning tool according to a third embodiment of the invention, with a cutting insert mounted in the insert seat,
- Fig. 4b: is an exploded view of the turning tool and cutting insert of Fig. 4a,
- Fig. 4c: is a top view of the turning tool and cutting insert of Fig. 4a,
- Fig. 4d: is a sectional lateral view through the turning tool and cutting insert of Fig. 4a as seen in the section indicated "IVd" in Fig. 4c,
- Fig. 4e: is a view corresponding to Fig. 4c showing the turning tool without cutting insert, and
- Fig. 4f: is a sectional lateral view corresponding to Fig. 4d showing the turning tool without cutting insert as seen in the section indicated "IVf" in Fig. 4e.

### DETAILED DESCRIPTION OF EMBODIMENTS OF THE INVENTION

Fig 1 shows a turning tool 100 forming part of the prior art and which especially demonstrates a main problem related to such turning tools, which the invention aims to solve. Namely, that front end portions 101a-b of opposite side wall sections 102a-b of an insert seat 103 provided in a tool body 104 of the turning tool 100 being deformed (see the front end portion 101a) due to one or a few heavy impacts applied thereto by a cutting insert 105 mounted in the insert seat by cutting forces acting laterally thereupon, or simply by regular wear over time by continuous contact between the front end portions 101a-b of the wall sections 102a-b and the cutting insert and small movements of the cutting insert against said front end portions due to lateral forces acting upon the cutting insert during cutting operations performed by the turning tool. In general, the more elongated the cutting insert used is, the greater lateral loads are applied to the insert seat, due to the greater leverage. With that said, the problem also exists by turning tools adapted to be used with rather short cutting inserts.

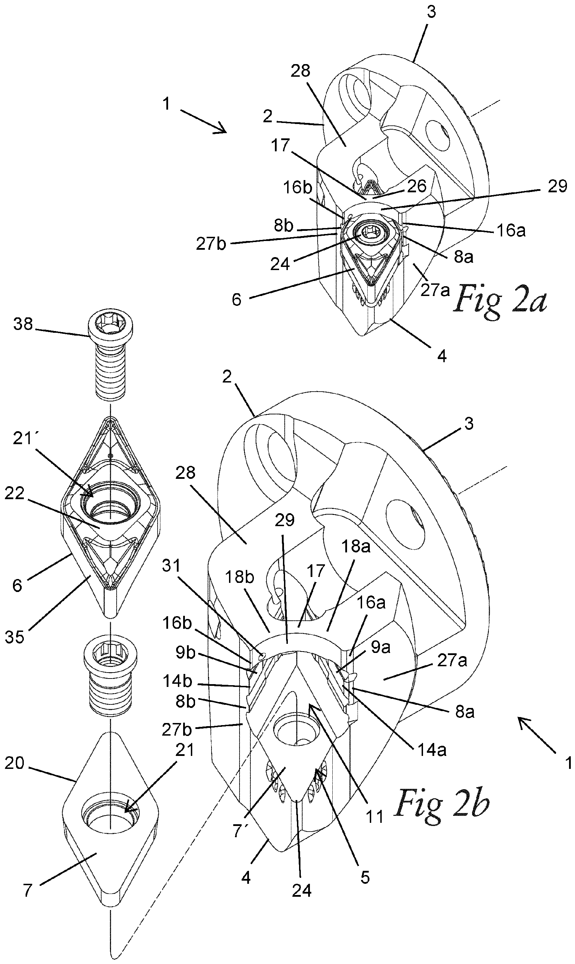

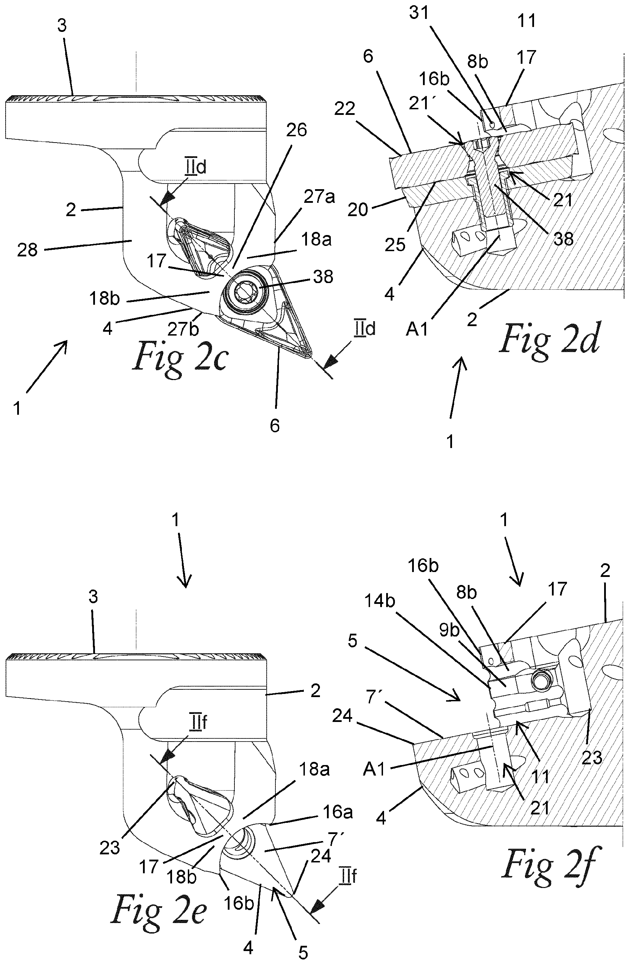

Three different embodiments of a turning tool 1 according to the present invention, each configured to together with a cutting insert 6a-c form a turning tool assembly according to the present invention, are illustrated in Figs 2a-4f. The turning tool 1 and turning tool assembly according to the invention will now be described while at the same time making reference to all these drawings.

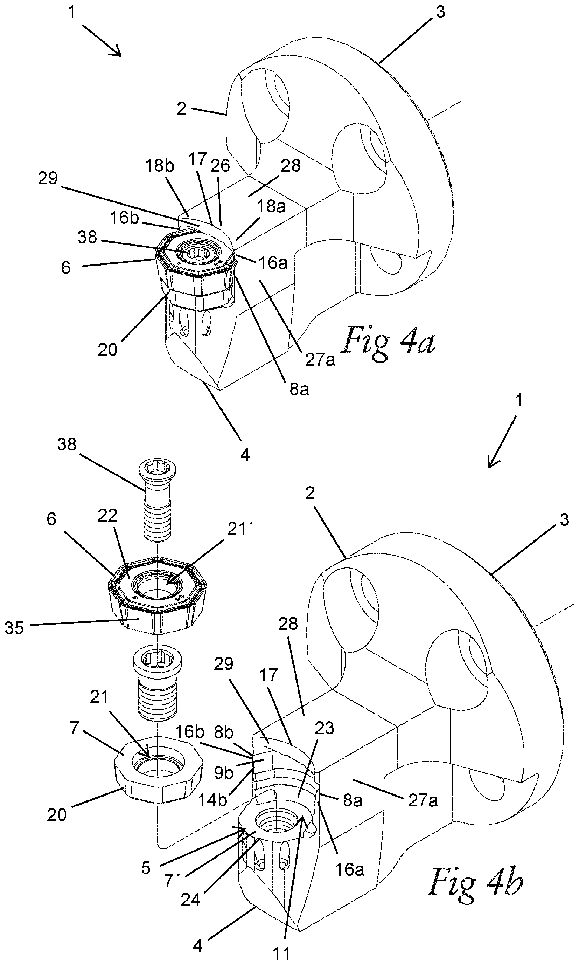

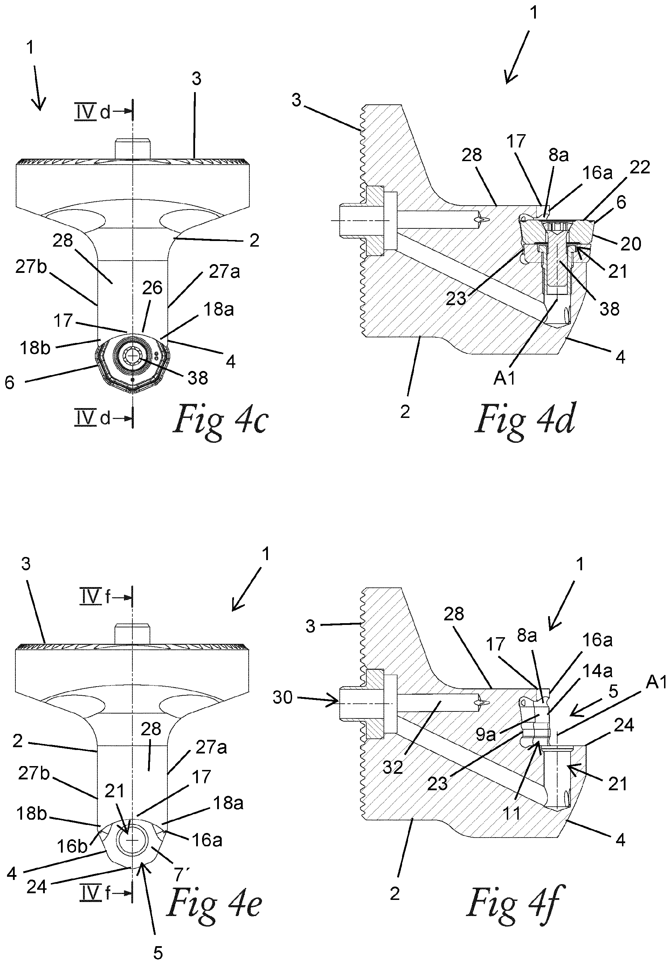

Figs 2a-2f and 3a-3g show two slightly different turning tools 1 according to the present invention intended for use with a sharp edged elongated cutting insert 6a-c for fine precision machining, or profiling, whereas Figs 4a-4f show a turning tool 1 according to the present invention intended for use with a hexagonal cutting insert 6a-c for "roughing" operations. The effect of the inventive features are however the same or at least substantially the same for all of these turning tools, which is why the same or corresponding features need not be described in detail for each of these embodiments, but the components and parts described for one of the turning tools, i.e. one of the three embodiments, and indicated with corresponding reference numerals on the other turning tools, have the same or a corresponding function and effect also for the other turning tools, i.e. other embodiments shown, if not otherwise stated.

A turning tool 1 according to the invention comprises a tool body 2. The tool body has at one end 3 thereof a coupling portion configured for attachment to a machine tool, and at another end 4 thereof an insert seat 5 configured to accommodate a cutting insert 6a-c in a state of use of the turning tool 1, i.e. when this is provided with a said cutting insert, mounted in the insert seat, and used for turning machining of a workpiece. It should be made clear that the fact that the tool body has two said ends do not in any way define a specific design thereof, but the invention may be applied to a turning tool 1 with a large number of differently shaped tool bodies 2, such as having elongated, short, straight or curved shapes, and it may also be provided with more than two ends.

The insert seat 5 comprises a bottom support surface 7 and first 8a and second 8b side wall sections extending along at least a part, in the embodiments shown about half, of the bottom support surface 7 on opposite lateral sides thereof. The first side wall section 8a comprises a first inner side wall surface 9a and the second side wall section 8b comprises a second inner side wall surface 9b. The bottom support surface 7 and the first 9a and second 9b inner side wall surfaces thus together define a pocket-like space 11 for receiving at least a part of the cutting insert 6a-c in said state of use. The first inner side wall surface 9a has a front end 14a located at a front end portion 16a of the first side wall section 8a and the second inner side wall surface 9b has a front end 14b located at a front end portion 16b of the second side wall section 8b such that the front ends 14a-b of the first 9a and second 9b inner side wall surfaces define an opening therebetween into said space 11.

The first 9a and second 9b inner side wall surfaces of the first 8a and second 8b side wall sections extend divergently from each other in a direction away from a rear end 23 of the insert seat 5 towards the opening thereof such that a width of the space 11 defined between the first 9a and second 9b inner side wall surfaces increases in said direction.

Each of the first 9a and second 9b inner side wall surfaces of the first 8a and second 8b side wall sections is configured to form, in each case together with an outer side surface 27a-b of the tool body 2 adjacent to the insert seat 5 and located on the same side thereof as the respective inner side wall surface, a front end portion 16a-b of the respective side wall section 8a-b having an acute angle as seen in top view. This shall be interpreted as that the extension of each inner side wall surface 9a-9b and the extension of the respective adjacent said outer side surface 27a-b form an acute angle between them, as measured inside the side wall section 8a-b in question, i.e. in each case the inner side wall surface 9a-9b and the respective adjacent outer side surface 27a-b taper towards a point at or in proximity of the respective front end portion 16a-b of the side wall surface 8a-b. However, the acute angled shape each pair 9a, 27a; 9b, 27b of said surfaces form may also have a chamfered end portion, as is seen for instance in Fig 3c.

The rear end 23 of the insert seat 5 is to be understood as the end thereof opposite to a front end 24, wherein the front end accommodates a part of the cutting insert 6a-c with an active cutting edge 19 in said state of use, i.e. the front end being the end configured to face a workpiece to be machined by the turning tool 1 during use thereof. The bottom support surface 7 of the insert seat 6 has a symmetrical, or at least substantially symmetrical, in the embodiments shown rhombic or hexagonal shape.

In the embodiments shown the turning tool 1 further comprises a shim 20, configured to be arranged between the cutting insert 6a-c and the tool body 2 in the state of use, for stabilizing the cutting insert and protecting the tool body. In such a case the bottom support surface 7 of the insert seat 5 is considered to be defined by a top surface of the shim 20. However, the bottom support surface 7 of the insert seat could also be defined by a permanent bottom surface 7' of the tool body 2 (on which the shim 20 is configured to be mounted if present) in the case no shim is used.

The bottom support surface 7 of the insert seat 5 is provided with a hole 21 in the center thereof, and the cutting insert 6a-c is provided with a corresponding through-hole 21' extending between top 22 and bottom 25 surfaces thereof, to enable attachement of the cutting insert by a fastening element, especially a screw 38, to the bottom support surface of the insert seat. The hole 21 in the bottom support surface is preferably a threaded hole. However, in the presence of a shim 20, as in the embodiments shown, the shim may be provided with a blank through-hole which continues into the surface 7' of the tool body 2 located underneath the shim, in the state of use, and the threads may be arranged in that continuing portion of the hole 21.

The insert seat 5 further comprises a stiff member 17 configured to be rigidly connected by a first end portion 18a thereof to an upper part of the front end portion 16a of the first side wall section 8a and by a second end portion 18b thereof to an upper part of the front end portion 16b of the second side wall section 8b and to extend between and rigidly interconnect said upper parts of the front end portions 16a-b of the first 8a and second 8b side wall sections over and at a distance to the bottom support surface 7 and over said space 11. Preferably the stiff member 17 is formed in one piece with the first 8a and second 8b side wall sections, at the upper parts thereof, as is the case in the embodiments of the turning tool 1 shown.

A top surface 26 of the stiff member 17 is coherent, i.e. contiguous in one and the same plane, with portions of a top surface 28 of the tool body 2 adjacent to the stiff member 17. The stiff member may be formed with a center thereof located at a distance to a portion of the top surface of the tool body adjacent to the rear end 23 of the insert seat, as a "bridge" (Figs. 2a-3g), or be coherent with and formed as an extension of said portion of the top surface over the insert seat 5, as a "roof" (Figs. 4a-4f). In any case, the stiff member 17 is to be considered as the part which extends between said upper parts of the first and second side wall sections over the bottom support surface.

The stiff member 17 is rigidly connected by its first and second end portions 18a-b thereof to and over an entire height of the respective upper parts of the front end portions 16a-b of the first 8a and second 8b side wall sections 8a, wherein the height of each said upper part is defined as at least 20%, preferably at least 25%, even more preferred at least 30%, of a height of the respective front end portion 16a-b measured between an upper end thereof (in the embodiments shown located at the top surface 28 of the tool body 2) and a position therealong located in a plane in which the bottom support surface 7 extends.

The stiff member 17 is further rigidly connected by its first and second end portions 18a-b thereof to and over at least 20%, preferably at least 25%, even more preferred at least 30%, of a length of respective ones of the first 9a and second 9b inner side wall surfaces, along the upper portions thereof, wherein the length of each inner side wall surface 9a-b is measured from the front end 14a-b to a rear end thereof, in a direction from said front end 14a-b towards the rear end 23 of the insert seat 5.

The stiff member 17 is arranged between the center hole 21 of the bottom support surface 7 and the rear end 23 of the insert seat 5 such that the center hole is not covered by any part of the stiff member as seen in top view in a direction perpendicular to the plane in which the bottom support surface 7 extends, or in a direction in parallel with a center axis A1 of the center hole 21.

A front side surface 29 of the stiff member 17 is concavely formed, preferably arc-shaped or at least substantially arc-shaped, as seen in top view, such that a center of the front side surface 29 of the stiff member 17 is located closer to the rear end 23 of the insert seat 5 than portions of the front side surface 29 located at the first 18a and second 18b end portions of the stiff member 17. Furthermore, the stiff member 17 is arranged such that a distance from the center axis A1 of the center hole 21 of the bottom support surface 7 to the front side surface 29 at the center of the stiff member 17 (in said state of use), as measured from said center axis A1 in a direction in parallel with the plane in which the bottom support surface 7 extends towards the rear end 23 of the insert seat 5, is equal to or less than 40%, preferably equal to or less than 30%, even more preferred equal to or less than 20%, of a total length of the bottom support surface 7, as measured from a front end of the bottom support surface, most distant from the rear end 23 of the insert seat 5 and located at the front end 24 thereof, to a rear end of the bottom support surface 7, located at or close to the rear end 23 of the insert seat.

The tool body 2 of the turning tool 1 is further provided with a coolant conveying system, comprising an inlet 30 configured to receive coolant from the machine tool, at least one coolant passageway 32 for passage of coolant from the inlet 30 to the outlet 31, and an outlet 31 located in the front side surface 29 of the stiff member 17 and configured to dispense coolant over at least a part of the front portion 24 of the insert seat 5, and more specifically towards the active cutting edge 19 of a said cutting insert 6a-c mounted in the insert seat, during use of the turning tool 1.

The stiff member 17 of the turning tool 1 according to the second embodiment of the invention (see Figs 3a-3g) is further provided with two stop surfaces 33a-b, which stop surfaces are arranged on the front side surface 29 of the stiff member 17 to face in a direction away from the rear end 23 and towards the front end 24 of the insert seat 5. The stop surfaces on the stiff member are optionally machined, especially grinded, surfaces. These stop surfaces and the function thereof is further described below.

A turning tool assembly according to the invention comprises a turning tool 1 as described above and a cutting insert 6a-c configured to be fixedly secured in the insert seat 5 of the tool body 2 of the turning tool 1 in a mounted state of the turning tool assembly, or in a state in which the turning tool assembly is used for performing a cutting machining operation on a workpiece (=state of use).

The cutting insert 6a-c comprises a top surface 22, an opposite bottom surface 25 by which the cutting insert is configured to bear on the bottom support surface 7 of the insert seat 5 of the turning tool 1 of the turning tool assembly, i.e. the bottom support surface 7 of the insert seat is configured to provide support for the bottom surface 25 of the cutting insert 6a-c in said state of use. The cutting insert 6a-c further comprises a circumferential side surface 35 connecting the top surface and the bottom surface.

It should be made clear that all of these surfaces do not have to be formed by one and the same coherent surface with a single orientation, but each of these could be formed by an arbitrary number of subsurfaces, extending with different angles with respect to a given reference, which together constitute and define an extension of the respective surface. The top surface 22 is considered as the surface on the side of the cutting insert 6a-c seen in a top view (see Figs 2c, 3c and 4c) and facing away from the bottom support surface 7 when the cutting insert is mounted in the insert seat. The bottom surface 25 is in the same way considered as the surface on the side of the cutting insert 6a-c seen in a bottom view (not shown), facing the bottom support surface in the mounted position.

The turning tool 1 is configured to receive the cutting insert 6a-c in the insert seat 5 in said state of use of the turning tool assembly such that the stiff member 17 configured to extend between said upper parts of the front end portions 16a-b of the first 8a and second 8b side wall sections rigidly interconnects these side wall sections, at the upper parts thereof, over at least a portion of the top surface 22 of the cutting insert 6a-c. More specifically, the stiff member 17 is designed and arranged to cover at least 10%, preferably at least 15%, of the top surface 22 of the cutting insert 6a-c in said state of use, as seen in top view.

In the embodiment of a turning tool assembly where the turning tool 1 is provided with stop surfaces 33a-b on the stiff member 17 (shown in Figs 3a-3g) the cutting insert 6b is provided with a first 34a and a second 34b grinded contact surface, configured to be associated with the first 33a and second 33b stop surface, respectively. The stop surfaces on the stiff member may also be machined, especially grinded, to achieve a more precise contact between these stop surfaces and the contact surfaces of the cutting insert.

The cutting insert 6b further comprises a first nose portion 36a and a second opposite nose portion 36b. More specifically, the cutting insert has a symmetrical, rhombic shape (in top view) with two acute nose portions pointing away from each other. The first nose portion 36a is provided with a first cutting edge 19 arranged at a transition between the top surface 22 and the circumferential side surface 35 at the first nose portion. The second nose portion 36b is correspondingly provided with a second cutting edge arranged at a transition between the top surface 22 and the circumferential side surface 35 at the second nose portion. The cutting insert is thus indexable so that the second nose portion may be used as the active nose portion after the first nose porton, and more specifically the first cutting edge 19 thereof, is worn down.

The stop surfaces 33a-b of the insert seat 5 are arranged on a front surface 37 of the stiff member 17 on opposite sides of a center thereof located midway between the first and second side wall sections. The first 34a and second 34b contact surfaces are arranged at the top surface 22 of the cutting insert 6b and configured to extend away from adjacent parts of the top surface in a direction away from the bottom surface 25 of the cutting insert.

The first 34a and second 34b contact surfaces are arranged on the top surface 22 of the cutting insert 6b on opposite sides of a first reference plane RP1 extending between the top 22 and bottom 25 surfaces of the cutting insert 6b and in a longitudinal direction of the cutting insert through front and rear ends thereof, namely the first 36a and second 36b nose portions, so as to divide the cutting insert into two geometrically symmetrical halves. The first 34a and second 34b contact surfaces are further arranged on the same side of a second reference plane RP2, extending between the top 22 and bottom 25 surfaces of the cutting insert 6b, perpendicular to the first reference plane and intersecting this in a center of the cutting insert. Furthermore, the first 34a and second 34b contact surfaces are arranged on the opposite side of the second reference plane RP2 with respect to the first nose portion 36b and facing away from it.

Each stop surface 33a-b of the stiff member 17 is configured to provide support for the cutting insert 6b in the mounted state of the turning tool assembly by contact with a respective one of the contact surfaces 34a-b of the cutting insert, so as to form two of the generally used at least three contact points between the cutting insert and insert seat. The cutting insert could however be provided with only one said contact surface 34a-b, at a longitudinal center of the cutting insert or at one side thereof, and the insert seat 5 with one corresponding said stop surface 33a-b. In such a case, the insert seat is preferably provided with at least two additional clearance side contact points, to provide support for the cutting insert through at least three contact points.

A front side/direction is to be considered as a side/direction facing towards a workpiece to be machined by the turning tool assembly in the state of use thereof.

A side wall section may comprise one or more parts and surfaces, in the same or different planes and coherent or arranged with spaces in between them - in itself or together defining a said side wall section.

To summarize, the invention provides a turning tool and a turning tool assembly having a stronger and stiffer insert seat with respect to insert seats of such tools and assemblies already known. This results especially in a more wear resistant tool and thereby increased tool life, but also imply other positive effects, such as increased performance of the tool as this may more stabily hold a cutting insert in a precise position during a turning operation, which increase the possibilities to achieve a satisfying surface finish of the machined workpiece. In addition thereto, the stiff member of the turning tool and a turning tool assembly according to the invention imply several other benefits, such as facilitating a more efficient cooling of the tool and insert, support for the insert and load distribution in the cutting insert and turning tool body.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A turning tool (1) comprising a tool body (2),
the tool body (2) having at one end (3) thereof a coupling portion configured for attachment to a machine tool, and at another end (4) thereof an insert seat (5) configured to accommodate a cutting insert (6a-c), wherein
the insert seat (5) comprises a bottom support surface (7) and first (8a) and second (8b) side wall sections extending along at least a part of the bottom support surface (7) on opposite lateral sides thereof;
the first side wall section (8a) comprises a first inner side wall surface (9a) and the second side wall section (8b) comprises a second inner side wall surface (9b),
the bottom support surface (7) and the first (9a) and second (9b) inner side wall surfaces together define a space (11) for receiving at least a part of a said cutting insert (6a-c); the first inner side wall surface (9a) has a front end (14a) located at a front end portion (16a) of the first side wall section (8a) and the second inner side wall surface (9b) has a front end (14b) located at a front end portion (16b) of the second side wall section (8b); and wherein
the front ends (14a-b) of the first (9a) and second (9b) inner side wall surfaces define an opening therebetween into said space (11);
***characterized* in that** the insert seat (5) further comprises a stiff member (17) configured to be rigidly connected by a first end portion (18a) thereof to an upper part of the front end portion (16a) of the first side wall section (8a) and by a second end portion (18b) thereof to an upper part of the front end portion (16b) of the second side wall section (8b) and to extend between said upper parts of the front end portions (16a-b) of the first (8a) and second (8b) side wall sections over and at a distance to the bottom support surface (7).

2. A turning tool (1) according to claim 1, ***characterized* in that** the stiff member (17) is made in one piece with the upper part of the front end portion (16a) of the first side wall section (8a) and the upper part of the front end portion (16b) of the second side wall section (8b).

3. A turning tool (1) according to claim 2, ***characterized* in that** a top surface (26) of the stiff member (17) is coherent with portions of a top surface (28) of the tool body (2) adjacent to the stiff member (17).

4. A turning tool (1) according to any of the claims 1-3, ***characterized* in that** the first (9a) and second (9b) inner side wall surfaces of the first (8a) and second (8b) side wall sections extend divergently from each other in a direction away from a rear end (23) of the insert seat (5) towards the opening thereof such that a width of the space (11) defined between the first (9a) and second (9b) inner side wall surfaces increases in said direction.

5. A turning tool (1) according to any of the preceding claims, ***characterized* in that** at least one of the first (9a) and second (9b) inner side wall surfaces of the first (8a) and second (8b) side wall sections is configured to form, together with an outer side surface (27a-b) of the tool body (2) adjacent to the insert seat (5) and located on the same side thereof as said at least one of the first (9a) and second (9b) inner side wall surfaces, a front end portion (16a-b) of the respective side wall section (8a-b) having an acute angle as seen in top view.

6. A turning tool (1) according to claim 5, ***characterized* in that** each of the first (9a) and second (9b) inner side wall surfaces of the first (8a) and second (8b) side wall sections is configured to form, in each case together with an outer side surface (27a-b) of the tool body (2) adjacent to the insert seat (5) and located on the same side thereof as the respective inner side wall surface, a front end portion (16a-b) of the respective side wall section (8a-b) having an acute angle as seen in top view.

7. A turning tool (1) according to any of the preceding claims, ***characterized* in that** the stiff member (17) is configured to be rigidly connected by its first and second end portions (18a-b) thereof to and over an entire height of the respective upper parts of the front end portions (16a-b) of the first (8a) and second (8b) side wall sections (8a), wherein the height of each said upper part is defined as at least 20%, preferably at least 25%, even more preferred at least 30%, of a height of the respective front end portion (16a-b) measured between an upper end thereof and a position therealong located in a plane in which the bottom support surface (7) extends.

8. A turning tool (1) according to any of the preceding claims, ***characterized* in that** the stiff member (17) is configured to be rigidly connected by its first and second end portions (18a-b) thereof to and over at least 20%, preferably at least 25%, even more preferred at least 30%, of a length of respective ones of the first (9a) and second (9b) inner side wall surfaces, along respective upper portions thereof, wherein the length of each inner side wall surface (9a-b) is measured from the front end (14a-b) to a rear end thereof, in a direction from said front end (14a-b) towards a rear end (23) of the insert seat (5).

9. A turning tool (1) according to any of the preceding claims, ***characterized* in that** a front side surface (29) of the stiff member (17) is concavely formed, preferably arc-shaped or at least substantially arc-shaped, as seen in top view, such that a center of the front side surface (29) of the stiff member (17) is located closer to a rear end (23) of the insert seat (5) than portions of the front side surface (29) located at the first and second end portions (18a-b) of the stiff member (17).

10. A turning tool (1) according to any of the preceding claims, ***characterized* in that** the bottom support surface (7) has a symmetrical, or at least substantially symmetrical, shape, that it is provided with a hole (21), especially a threaded hole, in the center thereof, to enable attachement of a said cutting insert (6a-c) by a fastening element, especially a screw (38), thereto, and that the stiff member (17) is arranged between the center hole (21) of the bottom support surface (7) and a rear end (23) of the insert seat (5) such that the center hole (21) is not covered by any part of the stiff member (17) as seen in top view.

11. A turning tool (1) according to claims 9 and 10, ***characterized* in that** the stiff member (17) is arranged such that a distance from a center axis (A1) of the center hole (21) of the bottom support surface (7) to the center of the front side surface (29) of the stiff member (17), as measured from said center axis (A1) in a direction in parallel with a plane in which the bottom support surface (7) extends towards the rear end (23) of the insert seat (5), is equal to or less than 40%, preferably equal to or less than 30%, even more preferred equal to or less than 20%, of a total length of the bottom support surface (7), as measured from a front end of the bottom support surface (7), most distant from the rear end (23) of the insert seat (5), to a rear end of the bottom support surface (7), located at or close to the rear end (23) of the insert seat (5).

12. A turning tool (1) according to any of the preceding claims, ***characterized* in that** the tool body (2) is provided with a coolant conveying system, comprising
an inlet (30) configured to receive coolant from the machine tool,
an outlet (31) located behind at least a front portion of the insert seat (5) and configured to dispense coolant over at least a part of said front portion during use of the turning tool (1), and
at least one coolant passageway (32) for passage of coolant from the inlet (30) to the outlet (31) of the coolant conveying system,
wherein the outlet (31) is arranged in a front side surface (29) of the stiff member (17).

13. A turning tool (1) according to any of the preceding claims, ***characterized* in that** the stiff member (17) is provided with at least one stop surface (33a-b) arranged to face in a direction away from a rear end (23) and towards a front end (24) of the insert seat (5).

14. A turning tool assembly comprising a turning tool (1) and a cutting insert (6a-c),
the cutting insert (6a-c) having opposite facing top (22) and bottom (25) surfaces connected by a circumferential side surface (35),
the turning tool (1) comprising a tool body (2),
the tool body (2) having at one end (3) thereof a coupling portion configured for attachment to a machine tool, and at another end (4) thereof an insert seat (5) configured to accommodate the cutting insert (6a-c) in a mounted state of the turning tool assembly, wherein
the insert seat (5) comprises a bottom support surface (7) configured to provide support for the bottom surface (34) of the cutting insert (6a-c) in said mounted state, and first (8a) and second (8b) side wall sections extending along at least a part of the bottom support surface (7) on opposite lateral sides thereof;
the first side wall section (8a) comprises a first inner side wall surface (9a) and the second side wall section (8b) comprises a second inner side wall surface (9b),
the bottom support surface (7) and the first (9a) and second (9b) inner side wall surfaces together define a space (11) for receiving at least a part of the cutting insert (6a-c);
the first inner side wall surface (9a) has a front end (14a) located at a front end portion (16a) of the first side wall section (8a) and the second inner side wall surface (9b) has a front end (14b) located at a front end portion (16b) of the second side wall section (8b); and wherein
the front ends (14a-b) of the first (9a) and second (9b) inner side wall surfaces define an opening therebetween into said space (11);
***characterized* in that** the insert seat (5) further comprises a stiff member (17) configured to be rigidly connected by a first end portion (18a) thereof to an upper part of the front end portion (16a) of the first side wall section (8a) and by a second end portion (18b) thereof to an upper part of the front end portion (16b) of the second side wall section (8b) and to extend between said upper parts of the front end portions (16a-b) of the first (8a) and second (8b) side wall sections over at least a portion of the top surface (22) of the cutting insert (6a-c) in said mounted state.

15. A turning tool assembly according to claim 14, ***characterized* in that** the stiff member (17) is designed and arranged to cover at least 10%, preferably at least 15%, of the top surface (22) of the cutting insert (6a-c) in said mounted state, as seen in top view.

16. A turning tool assembly according to any of the claims 14-15, ***characterized* in that** the stiff member (17) is provided with at least one stop surface (33a-b) arranged to face in a direction away from a rear end (23) and towards a front end (24) of the insert seat (5), and that the top surface (22) of the cutting insert (6b) is provided with at least one contact surface (34a-b) associated with the at least one stop surface (33a-b) of the stiff member (17), wherein the at least one stop surface (33a-b) of the stiff member (17) is configured to provide support for the cutting insert (6b) in the mounted state of the turning tool assembly by contact with the at least one contact surface (34a-b) of the cutting insert (6b).

17. A turning tool assembly according to claim 16, ***characterized* in that** the at least one contact surface (34a-b) of the cutting insert (6b) is a machined, especially grinded, surface.

18. A turning tool assembly according to any of the claims 16-17, ***characterized* in that** the stiff member (17) is provided with at least two said stop surfaces (33a-b) and that the top surface (22) of the cutting insert (6b) is provided with at least two said contact surfaces (34a-b) each configured to be associated with a respective one of the at least two stop surfaces (33a-b) of the stiff member (17), wherein the stop surfaces (33a-b) of the stiff member (17) are arranged on opposite sides of the center thereof along the extension of the stiff member (17) from one end portion (18a) thereof to the other (18b), and the contact surfaces (34a-b) of the cutting insert (6b) are arranged on opposite sides of a first reference plane (RP1) extending between the top (22) and bottom (25) surfaces of the cutting insert (6b) and in a longitudinal direction of the cutting insert (6b) through front (24) and rear (23) ends thereof, so as to divide the cutting insert (6b) into two geometrically symmetrical halves.
